# EUROPÄISCHE PATENTANMELDUNG

(11) **EP 3 053 438 A1**
(43) Veröffentlichungstag der Anmeldung: **10.08.2016**
(21) Anmeldenummer: 16401009.2
(22) Anmeldetag: 01.02.2016
(51) Int. Cl.: A01M 7/00

(54) **VERTEILERGESTÄNGE**

(30) Priorität: 03.02.2015 DE 102015101493
(71) Anmelder: Amazonen-Werke H. Dreyer GmbH & Co. KG, 49205 Hasbergen (DE)
(72) Erfinder: Oberheide, Friedrich, 49143 Bissendorf (DE); Kowallik, Daniel, 47443 Moers (DE)

(57) **Zusammenfassung**

Verteilergestänge (1)für eine landwirtschaftliche Verteilmaschine mit mehreren zueinander in Transportstellung mittels motorischer Stellelemente einklappbaren und in Arbeitsstellung ausklappbaren und durch Schwenkgelenke (9, 10) miteinander verbundenen Gestängeabschnitten (2, 4, 5, 6, 7, 8) und mit auf jeder Seite des Verteilergestänges (1) mittels Ausweichgelenken (11) und um aufrechte Achsen gegen eine nachgebende und als eine Kolbenstange (16.2) aufweisenden einfachwirkenden Hydraulikzylinder (16) ausgebildete Sperrvorichtung und/oder Federeinrichtung in auf die Fahrtrichtung (15) bezogene Vorwärts- und/oder Rückwärtsrichtung beim Auftreffen auf Hindernissen ausweichbar angeordneten Endabschnitten (7, 8), wobei der einfachwirkende Hydraulikzylinder (16) zwischen dem jeweiligen Endabschnitt (7, 8) des Gestänges und dem jeweiligen benachbarten innen liegenden Gestängeabschnitt (5, 6) angeordnet ist und die jeweiligen Endabschnitte (7, 8) zumindest in Arbeitsstellung ausweichbar gegenüber den innen liegenden Gestängeabschnitten (5, 6) hält, wobei dem einfachwirkenden Hydraulikzylinder (16) eine die Hydraulikflüssigkeit unter Druck zuführende und die Hydraulikflüssigkeit abführende Hydraulikleitung (23), die mit einem Hydrauliksystem (24, 29, 33) der Verteilmaschine verbunden ist, zugeordnet ist. Um einen einfach ausgestaltete Hydraulikschaltung für einen Hydraulikzylinder (16) für die Anordnung bei Ausweichgelenken (11) eines Verteilergestänges zu schaffen, ist vorgesehen, dass der an dem jeweiligen einfachwirkenden Hydraulikzylinder (16) angeschlossenen Hydraulikleitung beim Ausweichen des Endabschnittes (7, 8) des Gestänges (1) zumindest eine das Herausdrücken von Hydraulikflüssigkeit aus dem einfachwirkend gestalteten Hydraulikelement (16) zugeordnet ist.

## Beschreibung

Die Erfindung betrifft ein Verteilergestänge gemäß des Oberbegriffes des Patentanspruches 1.

Ein derartiges Verteilergestänge ist in EP 1 615 496 A1 beschrieben. Dieses Verteilergestänge für eine landwirtschaftliche Verteilmaschine besteht aus mehreren zueinander in Transportstellung einklappbaren und in Arbeitsstellung aus klappbaren Gestängeabschnitten. Das Verteilergestänge erstreckt sich quer zur Fahrtrichtung und kann Arbeitsbreiten von bis zu 24 m und mehr aufweisen. Der jeweils äußere Endabschnitt ist mittels Ausweichgelenken und um aufrechte Achsen gegen eine nachgebende Federkraft erzeugende Federeinrichtung in auf die Fahrtrichtung bezogene Vorwärts- und/oder Rückwärtsrichtung beim Auftreffen auf Hindernissen ausweichbar angeordnet. Durch einen jeweils zwischen dem jeweiligen Endabschnitt und dem inneren benachbarten Gestängeabschnitt des Verteilergestänges angeordneten Hydraulikzylinder wird der jeweilige Endabschnitt des Verteilergestänges in Arbeitsposition gehalten. Dieser Hydraulikzylinder ist so ausgestaltet, dass bei einem Auftreffen des Endabschnittes auf Hindernissen, dieser ohne Beschädigung ausweichen kann.

Das Ausweichen des auf ein Hindernis auf treffenden Endabschnittes wird hier dadurch ermöglicht, dass dem Auslegergestänge Sensormittel zum Erfassen eines Hindernisses zugeordnet sind. Diese Sensormittel steuern über eine Steuerung ein dem Hydraulikzylinder zugeordnetes Hydraulikventil an, welches dann in eine Stellung gebracht wird, in welcher der Hydraulikzylinder das Ausweichen des auf ein Hindernis auf treffenden Endabschnittes ermöglicht. Eine derartige Ausgestaltung ist relativ aufwändig und teuer.

Der Erfindung liegt die Aufgabe zu Grunde, einen einfach ausgestaltete Hydraulikschaltung für einen Hydraulikzylinder für die Anordnung bei Ausweichgelenken eines Verteilergestänges zu schaffen.

Diese Aufgabe der erfindungsgemäß dadurch gelöst, dass der an dem jeweiligen einfachwirkenden Hydraulikzylinder angeschlossenen Hydraulikleitung beim Ausweichen des Endabschnittes des Gestänges zumindest eine das Herausdrücken von Hydraulikflüssigkeit aus dem einfachwirkend gestalteten Hydraulikelement zugeordnet ist.

Infolge dieser Maßnahmen wird eine sehr einfache Hydraulikschaltung geschaffen, in welcher es dem Endabschnitt beim Auftreffen auf ein Hindernis in einfacher Weise ermöglicht wird, gegen die von dem Hydraulikzylinder aufgebrachte Kraft, ausweichen zu können.

In einfacher Weise lässt sich der in den Hydraulikzylinder wirksame Hydraulikdruck zur Erzeugung der Haltekraft des Hydraulikzylinders, wobei ein Ausweichen des Gestängeendabschnittes auf ein Hindernis ermöglicht ist, dadurch aufbringen, dass das Verteilergestänge über eine zumindest einen Hydraulikzylinder aufweisende Höhenverstellungseinrichtung in der Höhe verstellbar angeordnet ist, dass die Hydraulikleitung des jeweiligen einfachwirkenden Hydraulikzylinders an den zumindest einen das Hydraulikelement bildenden Hydraulikzylinder der Höhenverstellungseinrichtung und/oder der Hydraulikanlage der Höhenverstellungseinrichtung angeschlossen ist.

In einer anderen Ausgestaltung der Erfindung wird der in dem Hydraulikzylinder wirksame Hydraulikdruck zur Erzeugung der Haltekraft des Hydraulikzylinders, wobei ein Ausweichen des Gestängeendabschnittes auf ein Hindernis ermöglicht ist, dadurch aufgebracht, dass die an dem jeweiligen einfachwirkenden Hydraulikzylinder angeschlossene Hydraulikleitung mit zumindest einem Hydraulikspeicher in Verbindung steht.

In einer weiteren Ausgestaltung der Erfindung wird der in dem Hydraulikzylinder wirksame Hydraulikdruck zur Erzeugung der Haltekraft des Hydraulikzylinders, wobei ein Ausweichen des Gestängeendabschnittes auf ein Hindernis ermöglicht ist, dadurch aufgebracht, dass die Hydraulikleitung des jeweiligen einfachwirkenden Hydraulikzylinders an ein das Hydraulikelement bildendes Druckregelventil, dessen Überströmleitung mit dem Hydrauliksystem verbunden ist, angeschlossen ist.

In einer anderen Ausgestaltung der Erfindung wird der in dem Hydraulikzylinder wirksame Hydraulikdruck zur Erzeugung der Haltekraft des Hydraulikzylinders, wobei ein Ausweichen des Gestängeendabschnittes auf ein Hindernis ermöglicht ist, dadurch aufgebracht, dass die Hydraulikleitung des jeweiligen einfachwirkenden Hydraulikzylinders an ein das Hydraulikelement bildendes Druckbegrenzungsventil, dessen Überströmleitung mit dem Hydrauliksystem verbunden ist, angeschlossen ist.

In einer anderen Ausgestaltung der Erfindung wird der in dem Hydraulikzylinder wirksame Hydraulikdruck zur Erzeugung der Haltekraft des Hydraulikzylinders, wobei ein Ausweichen des Gestängeendabschnittes auf ein Hindernis ermöglicht ist, dadurch aufgebracht dass die Hydraulikleitung des jeweiligen einfachwirkenden Hydraulikzylinders an ein das Hydraulikelement bildendes Druckregelventil, dessen Überströmleitung mit dem Hydrauliksystem verbunden ist, angeschlossen ist, dass das Druckregelventil über eine Steuerleitung mit einer Hindernisse für das Verteilergestänge zumindest im Endabschnitt des Verteilergestänges erfassenden Sensoreinrichtung verbunden ist, dass bei Erkennen von Hindernissen für das Verteilergestänge von der Sensoreinrichtung ein Signal an das Druckregelventil übermittelt und entsprechend das Druckregelventil in eine Einstellung gebracht wird, in welcher unter Herabsetzung des eingestellten Druckwertes an dem Druckregelventil Hydraulikflüssigkeit unter verminderten Druck aus dem einfachwirkenden Hydraulikzylinder in das Hydrauliksystem überströmen kann.

Weitere Einzelheiten der Erfindung sind der Beispielsbeschreibung und den Zeichnungen zu entnehmen. Die Zeichnungen zeigen
- Fig.1: das Verteilergestänge einer als Pflanzenschutzspritze ausgebildeten landwirtschaftlichen Verteilmaschine in der Ansicht von hinten und in Prinzipdarstellung,
- Fig.2: das in Fahrtrichtung gesehen rechte Ausweichgelenk zwischen dem Endabschnitt und dem benachbarten innen liegenden Gestängeabschnitt in Arbeitsposition,
- Fig.3: das Ausweichgelenk gemäß Fig.2 in perspektivischer Darstellung,
- Fig.4: das Ausweichgelenk gemäß Fig.2 in Draufsicht,
- Fig.5: das Ausweichgelenk gemäß Fig.2 in perspektivischer Darstellung, jedoch in Ausweichstellung nach vorn, wenn sich im Bereich des Endabschnittes beim Rückwärtsfahren ein Hindernis befindet,
- Fig.6: das Ausweichgelenk gemäß Fig.5 in Draufsicht,
- Fig.7: das Ausweichgelenk gemäß Fig.2 in perspektivischer Darstellung, jedoch in Ausweichstellung nach oben, wenn der äußere Bereich des Endabschnittes Bodenberührung bekommt,
- Fig.8: das Ausweichgelenk gemäß Fig.7 in der Ansicht von hinten und
- Fig.9: das Ausweichgelenk gemäß Fig.7 in der Draufsicht,
- Fig.10: das geschlossene ringförmige Element des komplementären Gelenkelementes in perspektivischer Darstellung,

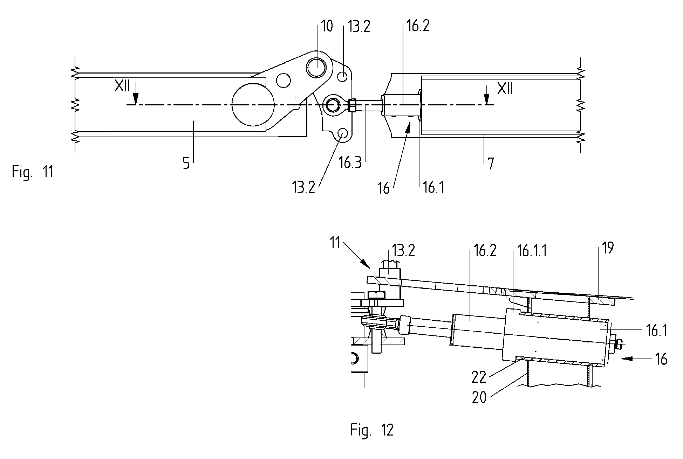

- Fig.11: das Ausweichgelenk in der Ansicht gemäß Fig.2, wobei das geschlossene ringförmige Element Gelenkelemente des Ausweichgelenkes ausgeblendet ist,
- Fig.12: die Anordnung des Hydraulikzylinders in dem Ausweichgelenk nach Fig.11 in der Ansicht XII - XII,
- Fig.13: ein erfindungsgemäßer Hydraulikplan, wobei die Ausweichzylinder mit den Hydraulikzylindern der Höhenverstellung des Verteilergestänges verbunden sind, in stark vereinfachter und Prinzipdarstellung,
- Fig.14: ein weiterer erfindungsgemäßer Hydraulikplan, wobei dem jeweiligen Ausweichzylinder ein Druckspeicher und Druckbegrenzungsventil zugeordnet ist, in stark vereinfachter und Prinzipdarstellung,
- Fig.15: ein weiterer erfindungsgemäßer Hydraulikplan, wobei dem jeweiligen Ausweichzylinder ein Druckregelventil zugeordnet ist, in stark vereinfachter und Prinzipdarstellung und
- Fig.16: ein weiterer erfindungsgemäßer Hydraulikplan, wobei dem jeweiligen Ausweichzylinder ein Druckregelventil mit einer Sensoreinrichtung zur Erfassung eines Hindernisses zugeordnet ist, in stark vereinfachter und Prinzipdarstellung.

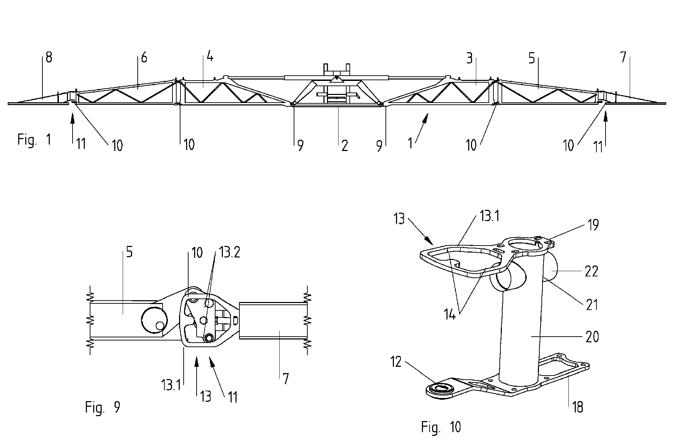

Das Verteilergestänge 1 einer als Pflanzenschutzspritze ausgebildeten landwirtschaftlichen Verteilmaschinen weist die mehreren zueinander in Transportstellung einklappbaren und in Arbeitsstellung, wie in Fig.1 dargestellt ist, und ausklappbaren Gestängeabschnitte 2, 3, 4, 5, 6, 7, 8 auf. Die Gestängeabschnitten 2, 3, 4, 5, 6, 7, 8 sind mittels Gelenken 9, 10 jeweils miteinander verbunden. Auf jeder Seite des Verteilergestänges 1 ist ein Endabschnitt 7, 8 angeordnet, welches jeweils zusätzlich mittels eines Ausweichgelenkes 11 am inneren benachbarten Gestängeabschnitt 5, 6 des Verteilergestänges 1, bezogen auf die Fahrtrichtung in Vorwärts- und/oder Rückwärtsrichtung beim Auftreffen auf Hindernissen ausweichbar angeordnet ist.

Jedes Ausweichgelenk 11 weist zwei übereinander liegende Gelenkanordnungen 12, 13 auf. Im Ausführungsbeispiel ist die die untere Gelenkanordnung 12 als Kugelgelenk ausgebildet, während die obere Gelenkanordnung 13 jeweils zwei in Fahrtrichtung 14 zueinander beabstandete und auseinander bewegbare komplementäre Gelenkelemente 15 aufweist. Zwischen dem jeweiligen Endabschnitt 7, 8 und dem jeweils benachbarten inneren Gelenksabschnitt 5, 6 ist ein als Hydraulikzylinder 16 ausgebildetes eine nachgebende Federkraft erzeugende Federeinrichtung angeordnet. Durch diese Federeinrichtung werden der Endabschnitt 7, 8 und der jeweils benachbarte innere Gestängeabschnitt 5, 6 im Bereich der Gelenkanordnung 13 federnd zusammengezogen und zueinander gehalten. Im vorteilhafterweise ist dem Hydraulikzylinder 16 ein nicht dargestellter Hydraulikspeicher zugeordnet, über den durch den Hydraulikzylinder 16 ausgeübte und auf die Gestängeabschnitten 5, 6, 7, 8, einwirkende Federkraft erzeugt wird.

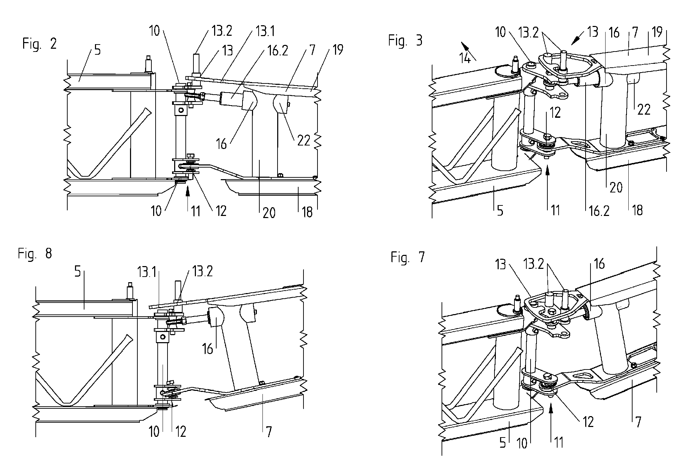

Das eine der komplementären Gelenkelemente 13 ist als geschlossenes ringförmiges Element 13.1 ausgebildet. Innerhalb dieses geschlossenen ringförmigen Elementes 13.1 sind zwei beabstandet zueinander angeordnete bolzen- und/oder stiftförmige Gelenkelemente 13.2 des komplementären Gelenkelementes 13 versetz- und/oder bewegbar angeordnet. Die die jeweilige Federkraft erzeugende Federeinrichtung, die von dem Hydraulikzylinder 16 gebildet wird, ist zwischen dem jeweiligen Endabschnitt 7, 8 und dem jeweiligen benachbarten innen liegenden Gestängeabschnitt 5, 6 angeordnet. Mittels dieser Federeinrichtung 16 werden die jeweiligen Endabschnitt 7, 8 des ausweichbar gegenüber den innen liegenden Endabschnitten 5, 6 gehalten. Durch die von dem Hydraulikzylinder 16 gebildete Federeinrichtung werden die beabstandeten komplementären Gelenkelemente 13, 13.1, 13.2 in Anlage aneinander anliegend gehalten, wie die Fig.2-4 zeigen. Die Innenkontur des ringförmigen Elementes 13.1 ist herzförmig ausgebildet.

Durch die geschlossene ringförmige Ausgestaltung dieses Gelenkelementes 13.1 wird sichergestellt, dass die zugeordneten Gelenkelemente 13.2, die von bolzen- und/oder stiftförmigen Gelenkelementen gebildet werden, nicht aus dem ringförmig ausgebildeten Gelenkelemente 13.1 herausspringen können. Somit ist eine sichere zueinander Ordnung der komplementär ausgestalteten Gelenkelemente 13.1 und 13.2 der entsprechenden Gelenkanordnung 13 immer gewährleistet.

Die Innenkontur des ringförmigen Elementes 13.1 mit den zwei zueinander beabstandeten Führungsbahnen 14 verringert sich ausgehend von den beabstandeten Anlagebereichen der beabstandet zueinander angeordneten Gelenkelemente 13.2 in Nichtausweichposition nicht. Somit wird der Abstand in diesem Bereich der Führungsbahnen 14 ausgehend von den vorerwähnten Anlagebereichen nicht geringer. Diese Gelenkanordnung 13 ist nach dem Prinzip Gelenkbolzen 13.2 und Gelenkhülse 13.1, wobei die Gelenkhülse 13.1 entsprechend größer gegenüber dem Gelenkbolzen 13.2 ausgestattet ist, ausgebildet.

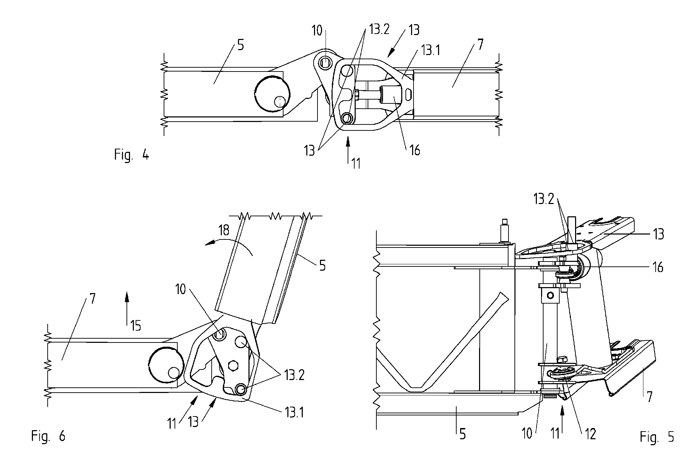

Die Funktionsweise der vorbeschriebenen erfindungsgemäßen Gelenkanordnung 11, 13 zwischen dem jeweiligen Endabschnitt 7, 8 und dem inneren benachbarten Gestängeabschnitt 5, ist Folgende:
Wenn, wie im Ausführungsbeispiel gemäß den Fig. 2-4 dargestellt, bei Rückwärtsfahren sich ein Hindernis im Bereich des Endabschnittes 7 des Verteilergestänges 1 befindet wird dieses nach vorn in Pfeilrichtung 17 gedrückt, so dass es in Vorwärtsrichtung, also entgegen der Fahrtrichtung 15, ausweicht. Hierbei verschwenkt der Endabschnitt 7 um die Gelenkachse des Kugelgelenkes 12 und den hinteren Gelenkbolzen 13.2, wie die Fig.5 und 6 zeigen. Bei dieser Ausweichbewegungen werden die der hintere Gelenkbolzen 13.2 und die hintere Ecke der des ringförmigen Gelenkelemente des 13.1 durch den Hydraulikzylinder 16 gegeneinander gedrückt. Nach dem Passieren des Hindernisses schwenkt der Endabschnitt 7 wieder in die in den Fig.2-4 dargestellte Position zurück, in welcher die beiden Gelenkbolzen 13.2 an den entsprechenden Stellen des ringförmigen Gelenkelementes 13.1 anliegen.

Gleiches geschieht in umgekehrter Weise, wenn bei Vorwärtsfahrt der Endabschnitt 7 des Verteilergestänges 1 nach hinten ausweicht, wenn sich im Bereich des Endabschnittes 7 ein Hindernis befindet, wie die Fig.5 und 6 zeigen.

Wenn der äußere Endabschnitt 7 dem Boden berührt, wird er nach oben gedrückt, wie die Fig.7-9 zeigen. Hierbei wird der Endabschnitt angehoben und schwenkt um die Gelenkachse des Kugelgelenk 12 nach oben, so dass die Gelenkbolzen 13.2 von den äußeren enden des ringförmigen Elementes 13.1 der Gelenkanordnung 13 abheben und in den freien Raum des inneren des Gelenkelementes 13.1 in Richtung nach außen sich verschieben, wie die Fig. 7-9 zeigen.

Der jeweilige Hydraulikzylinder 16 ist gemäß des Ausführungsbeispiels an dem jeweiligen Endabschnitt 7 bzw. 8 des Verteilergestänges 1 angeordnet. Der jeweilige Endabschnitt 7 bzw. 8 weist einen Untergurt 18 und einen Obergurt 19 auf, die durch eine Verbindungssäule 20 miteinander verbunden sind. In der Verbindungssäule 20 ist ein Durchbruch 21 angeordnet. In diesem Durchbruch 21 ist ein fest mit der Verbindungssäule 20 verbundenes Rohrstück 22 angeordnet. In dieses Rohrstück 22 ist das Zylinderrohr 16.1 des Hydraulikzylinders 16 gesteckt. An in dem Zylinderrohr 16.1 ist im Ausführungsbeispiel ein kreisförmig ausgestaltetes Ansatzelement 16.1.1 angeordnet. Hierdurch ist das Zylinderrohr 16.1 des Hydraulikzylinders 16 gegenüber dem Rohrstück 22 fixiert und kann Kräfte in Richtung des dem Endabschnitt 7 bzw. 8 des Verteilergestänges 1 jeweils benachbarten Gestängeabschnittes 5 bzw. 6 des Verteilergestänges 1 übertragen.

Gleichfalls ist selbst verständlich auch eine umgekehrte Anordnung bzw. Zuordnung des Hydraulikzylinders 16 zu dem Endabschnitt 7 bzw. 8 bzw. dem inneren benachbarten Gestängeabschnitt 5 bzw. 6 des Verteilergestänges 1 möglich, indem das Zylinderrohr des Hydraulikzylinders 16 an der Gelenkanordnung des benachbarten Gestängeabschnittes 5 bzw. 6 und die das Zwischenglied an der Verbindungssäule 20 des Endabschnittes 7 bzw. 8 angreifend angeordnet ist.

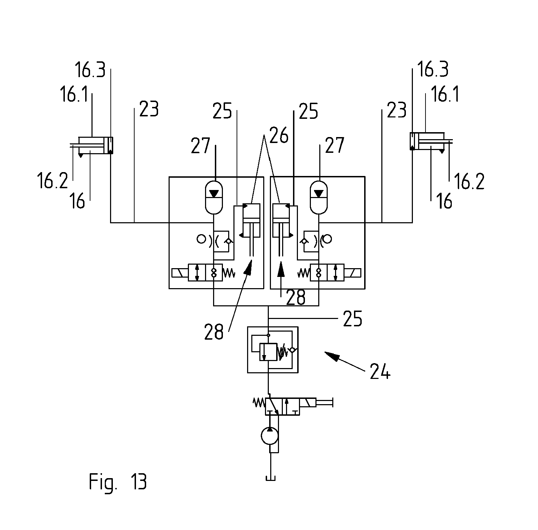

Im Folgenden wird die Druckluftbeaufschlagung des Hydraulikzylinders 16, der als einfachwirkende Hydraulikzylinder ausgebildet ist, anhand stark vereinfachter Hydraulikpläne gemäß den Fig. 13-16 er erläutert. An dieser Stelle wird darauf hingewiesen, dass weitere Komponenten einer Hydraulikanlage einer Verteilmaschine, wie insbesondere einer Pflanzenschutzspritze, an welcher das erfindungsgemäße Verteilergestänge angeordnet ist, der Übersichtlichkeit halber weggelassen und nicht dargestellt sind.

Der Hydraulikzylinder 16, der dem Ausweichgelenk 11 zugeordnet ist, ist gemäß dem Hydraulikplan nach Fig.13 über die Hydraulikleitung 23 mit der die Hydraulikanlage 24 mit den Hydraulikzylindern 24 für die Höhenverstellung des Verteilergestänges 1 zugeordneten Druckleitung 25 verbunden. Die Höhenverstellung für das Verteilergestänge 1 weist die beiden Hydraulikzylinder 26 auf. Über diese Hydraulikzylinder 26, die einfachwirkend ausgebildet sind, kann das Verteilergestänge 1 in der Höhe verstellt werden. Den Hydraulikzylindern 26 für die Höhenverstellung ist jeweils ein Druckspeicher 27 zur Dämpfung von Schwingungen aufgrund unebener Bodenoberflächen zugeordnet. Durch das Gewicht des Verteilergestänges 1 werden in die Kolben 26.1 und Kolbenstangen und 26.2 der Hydraulikzylinder 26 der Höhenverstellung für das Verteilergestänge in Pfeilrichtung 28 mit Druck belastet.

Die Funktionsweise beim Ausweichen des Endabschnittes 5 bzw. 6 beim Auftreffen auf ein Hindernis durch Einfahren der Kolbenstange 16.2 des Hydraulikzylinders 16 des Ausweichgelenke 11 nach dem Hydraulikplan nach Fig.13 ist folgende:
Wenn der Endabschnitt 7 oder 8 auf ein Hindernis auftrifft, weicht der entsprechende Endabschnitt 7 oder 8 entsprechend nach vorn oder hinten aus. Hierbei wird die Kolbenstange 16.2 in das Zylinderrohr 16.1 des Zylinders 16 hineingedrückt und verdrängt hierbei kolbenbodenseitig das sich in dem Zylinderraum 16.3 befindliche Hydrauliköl über die Hydraulikleitung 23 in den Hydraulikspeicher 27 und/oder den Kolben bodenseitigen Zylinderraum des zugeordneten Hydraulikzylinders 26 der Höhenverstellungseinrichtung. Nach dem der Endabschnitt 7 oder 8 das Hindernis passiert hat, schwenkt der entsprechende Endabschnitt 7 oder 8 wieder in seine Ausgangsposition zurück. Dies wird dadurch veranlasst, dass das in der Hydraulikleitung 23 durch den Hydraulikspeicher 27 und/oder die Hydraulikzylinder 26 unter Druck stehende Hydrauliköl wieder in den Zylinderraum 16.3 zurückgedrückt wird und hierdurch die Kolbenstange 16.2 des Hydraulikzylinders 16 wieder ausfährt. Somit wird der Endabschnitt 7 oder 8 wieder in seine vorgesehene Arbeitsposition in sich quer zur Fahrtrichtung erstreckender Ausrichtung gehalten.

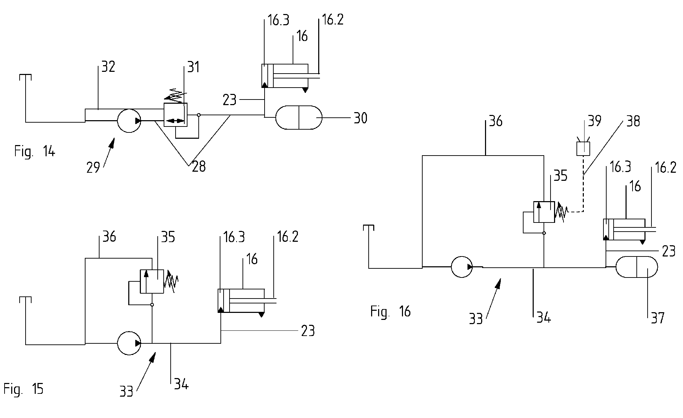

Der Hydraulikzylinder 16, der dem Ausweichgelenk 11 zugeordnet ist, ist gemäß dem Hydraulikplan nach Fig.14 ist über die Hydraulikleitung 23 an eine unter Druck stehende Hydraulikleitung 28 der vereinfacht dargestellten Hydraulikanlage 29 der Verteilmaschine angeordnet. Der Hydraulikleitung 23 ist ein Druckspeicher 30 zugeordnet. Zwischen der zu dem Ausweichzylinder 16 führenden Hydraulikleitung 23 und den Hydraulikdruck erzeugenden Hydraulikanlage 29 ist in der Druckleitung 28 das Druckbegrenzungsventil 31, dessen Überströmleitung 32 mit dem Hydrauliksystem verbunden ist, angeschlossen ist.

Die Funktionsweise beim Ausweichen des Endabschnittes 5 bzw. 6 beim Auftreffen auf ein Hindernis durch Einfahren der Kolbenstange 16.2 des jeweiligen Hydraulikzylinders 16 des Ausweichgelenkes 11 nach dem Hydraulikplan nach Fig.14 ist folgende:
Wenn der Endabschnitt 7 oder 8 auf ein Hindernis auftrifft, weicht der entsprechende Endabschnitt 7 oder 8 entsprechend nach vorn oder hinten aus. Hierbei wird die Kolbenstange 16.2 in das Zylinderrohr 16.1 des Zylinders 16 hineingedrückt und verdrängt hierbei kolbenbodenseitig das sich in dem Zylinderraum 16.3 befindliche Hydrauliköl über die Hydraulikleitung 23 in den Hydraulikspeicher 30 und/oder über das Druckbegrenzungsventil 31 und in die Überströmleitung 32 in das Hydrauliksystem 29. Nach dem der Endabschnitt 7 oder 8 das Hindernis passiert hat, schwenkt der entsprechende Endabschnitt 7 oder 8 wieder in seine Ausgangsposition zurück. Dies wird dadurch veranlasst, dass das in der Hydraulikleitung 23 durch den Hydraulikspeicher 30 und/oder die Hydraulikleitung 28 unter Druck stehende Hydrauliköl wieder in den Zylinderraum 16.3 zurückgedrückt wird und hierdurch die Kolbenstange 16.2 des Hydraulikzylinders 16 wieder ausfährt. Somit wird der Endabschnitt 7 oder 8 wieder in seine vorgesehene Arbeitsposition in sich quer zur Fahrtrichtung erstreckender Ausrichtung gehalten.

Der Hydraulikzylinder 16, der dem Ausweichgelenk 11 zugeordnet ist, ist gemäß dem Hydraulikplan nach Fig.15 ist über die Hydraulikleitung 23 an eine unter Druck stehende Hydraulikleitung 28 der vereinfacht dargestellten Hydraulikanlage 29 der Verteilmaschine angeordnet. Der Hydraulikleitung 23 kann ein nicht dargestellter Druckspeicher zugeordnet sein. Zwischen der zu dem Ausweichzylinder 16 führenden Hydraulikleitung 23 und den Hydraulikdruck erzeugen den Hydraulikanlage 33 ist in der Druckleitung 34 das Druckregelventil 35, dessen Überströmleitung 36 mit dem Hydrauliksystem 33 verbunden ist, angeschlossen ist.

Die Funktionsweise beim Ausweichen des Endabschnittes 5 bzw. 6 beim Auftreffen auf ein Hindernis durch Einfahren der Kolbenstange 16.2 des jeweiligen Hydraulikzylinders 16 des Ausweichgelenkes 11 nach dem Hydraulikplan nach Fig.15 ist folgende:
Wenn der Endabschnitt 7 oder 8 auf ein Hindernis auftrifft, weicht der entsprechende Endabschnitt 7 oder 8 entsprechend nach vorn oder hinten aus. Hierbei wird die Kolbenstange 16.2 in das Zylinderrohr 16.1 des Zylinders 16 hineingedrückt und verdrängt hierbei kolbenbodenseitig das sich in dem Zylinderraum 16.3 befindliche Hydrauliköl über die Hydraulikleitung 23 in den Hydraulikspeicher 30 und/oder über das Druckregelventil 35 und in die Überströmleitung 36 in das Hydrauliksystem 33. Nach dem der Endabschnitt 7 oder 8 das Hindernis passiert hat, schwenkt der entsprechende Endabschnitt 7 oder 8 wieder in seine Ausgangsposition zurück. Dies wird dadurch veranlasst, dass das in der Hydraulikleitung 23 durch den Hydraulikspeicher 30 und/oder die Hydraulikleitung 28 unter Druck stehende Hydrauliköl wieder in den Zylinderraum 16.3 zurückgedrückt wird und hierdurch die Kolbenstange 16.2 des Hydraulikzylinders 16 wieder ausfährt. Somit wird der Endabschnitt 7 oder 8 wieder in seine vorgesehene Arbeitsposition in sich quer zur Fahrtrichtung erstreckender Ausrichtung gehalten.

Der Hydraulikplan gemäß Fig. 16 entspricht vom Grundaufbau dem Hydraulikplan gemäß Fig. 15 mit dem Unterschied, dass zunächst der Hydraulikleitung 23 ein Druckspeicher 37 zugeordnet ist. Weiterhin ist an das Druckregelventil 35 über eine Steuerleitung 38 eine Sensoreinrichtung 39 angeordnet. Über die Sensoreinrichtung 39 können Hindernisse für die Endabschnittes 7 oder 8 erfasst werden. Bei Erkennen von Hindernissen für die Endabschnitte 7 oder 8 des Verteilergestänges 1 durch die jeweilige Sensoreinrichtung 39 wird ein Signal an das Druckregelventil 35 übermittelt. Dieses kann auch mithilfe einer zusätzlichen zugeordneten Steuereinrichtung geschehen. Das Druckregelventil 32 wird bei Erkennen eines Hindernisses für den jeweiligen Endabschnitt 7 oder 8 in eine entsprechende Einstellung gebracht wird, in welcher unter Herabsetzung des eingestellten Druckwertes an dem Druckregelventil 35 Hydraulikflüssigkeit unter verminderten Druck aus dem einfachwirkenden Hydraulikzylinder 16 des Ausweichgelenkes 11 in das Hydrauliksystem 33 überströmen kann. Nach dem der Endabschnitt 7 oder 8 das Hindernis passiert hat, schwenkt der entsprechende Endabschnitt 7 oder 8 wieder in seine Ausgangsposition zurück. Dies wird dadurch veranlasst, dass das in der Hydraulikleitung 23 durch den Hydraulikspeicher 30 und/oder die Hydraulikleitung 28 unter Druck stehende Hydrauliköl wieder in den Zylinderraum 16.3 zurückgedrückt wird und hierdurch die Kolbenstange 16.2 des Hydraulikzylinders 16 wieder ausfährt. Somit wird der Endabschnitt 7 oder 8 wieder in seine vorgesehene Arbeitsposition in sich quer zur Fahrtrichtung erstreckender Ausrichtung gehalten. Gleichzeitig wird nach dem Passieren des Hindernisses das Druckregelventil 35 wieder in seine Ausgangsstellung zurückgestellt.

## Patentansprüche

1. Verteilergestänge (1) für eine landwirtschaftliche Verteilmaschine mit mehreren zueinander in Transportstellung mittels motorischer Stellelemente einklappbaren und in Arbeitsstellung ausklappbaren und durch Schwenkgelenke (9, 10) miteinander verbundenen Gestängeabschnitten (2, 3, 4, 5, 6, 7, 8) und mit auf jeder Seite des Verteilergestänges (1) mittels Ausweichgelenken (11) und um aufrechte Achsen gegen eine nachgebende und als eine Kolbenstange (16.2) aufweisenden einfachwirkenden Hydraulikzylinder (16) ausgebildete Sperrvorichtung und/oder Federeinrichtung in auf die Fahrtrichtung bezogene Vorwärts- und/oder Rückwärtsrichtung beim Auftreffen auf Hindernissen ausweichbar angeordneten Endabschnitten (7, 8), wobei der einfachwirkende Hydraulikzylinder (16) zwischen dem jeweiligen Endabschnitt (7, 8) des Gestänges (1) und dem jeweiligen benachbarten innen liegenden Gestängeabschnitt (5, 6) angeordnet ist und die jeweiligen Endabschnitte (5, 6) zumindest in Arbeitsstellung ausweichbar gegenüber den innen liegenden Gestängeabschnitten (5, 6) hält, wobei dem einfachwirkenden Hydraulikzylinder (16) eine die Hydraulikflüssigkeit unter Druck zuführende und die Hydraulikflüssigkeit abführende Hydraulikleitung (23), die mit einem Hydrauliksystem (24, 29, 33) der Verteilmaschine verbunden ist, zugeordnet ist, **dadurch gekennzeichnet, dass** der an dem jeweiligen einfachwirkenden Hydraulikzylinder (16) angeschlossenen Hydraulikleitung (23) beim Ausweichen des Endabschnittes (7, 8) des Gestänges (1) zumindest eine das Herausdrücken von Hydraulikflüssigkeit aus dem einfachwirkend gestalteten Hydraulikelement (16) zugeordnet ist.

2. Verteilergestänge nach Anspruch 1, **dadurch gekennzeichnet, dass** das Verteilergestänge (1) über eine zumindest einen Hydraulikzylinder (26) aufweisende Höhenverstellungseinrichtung in der Höhe verstellbar angeordnet ist, dass die Hydraulikleitung (23) des jeweiligen einfachwirkenden Hydraulikzylinders (16) an den zumindest einen das Hydraulikelement bildenden Hydraulikzylinder (26) der Höhenverstellungseinrichtung und/oder der Hydraulikanlage der Höhenverstellungseinrichtung angeschlossen ist.

3. Verteilergestänge nach zumindest einem der vorstehenden Ansprüche, **dadurch gekennzeichnet, dass** die an dem jeweiligen einfachwirkenden Hydraulikzylinder (16) angeschlossene Hydraulikleitung (23) mit zumindest einem Hydraulikspeicher (27, 30, 37) in Verbindung steht.

4. Verteilergestänge nach Anspruch 1, **dadurch gekennzeichnet, dass** die Hydraulikleitung (23) des jeweiligen einfachwirkenden Hydraulikzylinders (16) an ein das Hydraulikelement bildendes Druckregelventil) um 30), dessen Überströmleitung (36) mit dem Hydrauliksystem (33) verbunden ist, angeschlossen ist.

5. Verteilergestänge nach Anspruch 1, **dadurch gekennzeichnet, dass** die Hydraulikleitung (23) des jeweiligen einfachwirkenden Hydraulikzylinders (16) an ein das Hydraulikelement bildendes Druckbegrenzungsventil (31), dessen Überströmleitung (32) mit dem Hydrauliksystem (32) verbunden ist, angeschlossen ist.

6. Verteilergestänge nach Anspruch 1, **dadurch gekennzeichnet, dass** die Hydraulikleitung (23) des jeweiligen einfachwirkenden Hydraulikzylinders (16) an ein das Hydraulikelement bildendes Druckregelventil (35), dessen Überströmleitung (6. 30) mit dem Hydrauliksystem (33) verbunden ist, angeschlossen ist, dass das Druckregelventil (35) über eine Steuerleitung (38) mit einer Hindernisse für das Verteilergestänge (1) zumindest im Endabschnitt des Verteilergestänges (1) erfassenden Sensoreinrichtung (39) verbunden ist, dass bei Erkennen von Hindernissen für das Verteilergestänge (1) von der Sensoreinrichtung (39) ein Signal an das Druckregelventil@35) übermittelt und entsprechend das Druckregelventil (35) in eine Einstellung gebracht wird, in welcher unter Herabsetzung des eingestellten Druckwertes an dem Druckregelventil (35) Hydraulikflüssigkeit unter verminderten Druck aus dem einfachwirkenden Hydraulikzylinder (16) in das Hydrauliksystem (33) überströmen kann.
